# EUROPEAN PATENT APPLICATION

(11) **EP 2 306 403 A1**
(43) Date of publication of application: **06.04.2011**
(21) Application number: 09290664.3
(22) Date of filing: 02.09.2009
(51) Int. Cl.: G06T 15/50, H04N 7/26

(54) **Method for drawing a composite image at a set top box STB of a telecommunication system**

(71) Applicant: Alcatel Lucent, 75008 Paris (FR)
(72) Inventor: Justen, Pascal Marie Edouard Julien, 1150 Sint-Pieters-Woluwe (BE); Acke, Willem Jozef Amaat, 2820 Rijmenam (BE)
(74) Representative: Anderlini, Alain

(57) **Abstract**

A method for drawing a composite image (P) at a client Set Top Box STB of a telecommunication system also comprising a server coupled to the STB. In the example, the composite image comprises objects (S, X, C) rendered on a background graphical buffer or image (B). The method comprises a first step of rendering (CT), at the server side, the objects (S, X, C) on a transparent graphical buffer (T) in order to obtain a temporary graphical buffer (T2). The temporary graphical buffer (T2) is then sent (DT) downstream from the server to the client STB. Finally, at the client side, the background graphical buffer (B) is mixed (AB) with the temporary graphical buffer (T2) to obtain the composite image (P). This method is applicable to a "thin" client STB because only a mixing operation is performed by the graphical processing unit GPU at the client side.

## Description

The present invention relates to a method for drawing a composite image at a client set top box of a telecommunication system also comprising a server coupled to said client set top box, said composite image comprising objects rendered on a background graphical buffer.

Such a method is adapted to be used in, e.g., the so-called "FlexTV" or "MyViewTV" concept which is an IPTV solution based on a platform which currently supports some 300,000 subscribers.

These concepts use the "thin" client approach to deliver a personalized set of applications from a telecommunication server to Set Top Boxes STB. The thin client approach is a client system involving no application software installation on the client STB side, thus dramatically reducing client STB management efforts. In other words, unlike the traditional "fat" client STB approach, a thin client STB runs, at the client side, the minimal software necessary in order to render viewable content, i.e. the composite image. Compared to a traditional fat client, the thin client approach is commercially more viable, with respect to STB pricing and offered services, thanks to the following advantages:
- Lighter CPU's and less RAM are required;
- A broader set of new and customized services and applications can be offered without maintenance (e.g. installation, upgrades, bug fixes) on the STB; and
- No extra HW for storing applications, only firmware-based STB is required, i.e. only the thin graphical layer and drivers must be present.

In more detail, instead of running a full-blown browser and a window manager, e.g. an X server, on the fat client STB, the thin client STB proposes a more lightweight solution consisting of a kernel and of using a thin graphical network Application Programming Interface API such as DirectFB (ref. Internet URL < http://www.directfb.org/ >). In this case, the browser is running on a server, which instructs the STB - through a thin networked graphical API - how to render the browser visual areas and components.

In order to achieve this approach, several networked graphical API's and protocols are possible, e.g. Virtual Network Computing VNC using the Remote Frame Buffer RFB or X11. However, the DirectFB-based approach has been considered the best choice in terms of overall performance (interactivity, network bandwidth usage, memory usage and processing power).

The optimal implementation of the DirectFB approach requires to use as much as possible the graphical operations that are available on the API. Therefore, upper graphical layers, such as the Cairo graphics library and Graphic Tool/Development Kits GTK/GDK, need to use them whenever possible. Unfortunately, in many cases the API is too limited (or on the Graphics Processing Unit GPU) and operations need to be rendered by the upper layers in software, i.e. on the CPU:
- The API does not support the needed graphical operation: e.g. advanced font rendering, complex shapes, anti-aliasing, morphing, sophisticated blending operations, texturing, etc.
- Graphical content manipulation on bitmaps, icons, ... with/without transparency: graying effects, shadow effects, texturing, linear transformations, etc.

In order to perform these advanced graphical operations in software by the CPU, the upper layers require direct access to the pixel content of the graphical buffer, i.e. pixel read operations. Obviously, this only works when the upper layers are residing on the same machine as the graphical buffer is. In case of remoting, these operations cannot be achieved.

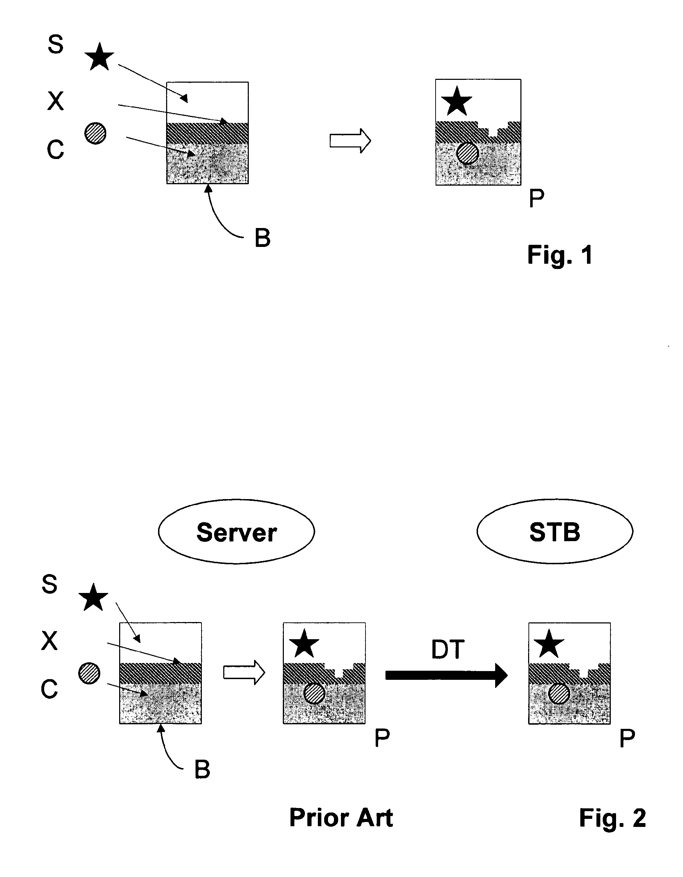

Several solutions exist to draw a composite image P by, e.g., blending objects such as a star S, a cross X and a circle C on a background graphical buffer or image B, as shown at Fig. 1. However, for highly interactive remote applications the performances of these known solutions is too low as will be explained below.

A first possibility is to keep the background graphical buffer B and perform rendering at the server side. This solution, known as "VNC approach", consists in rendering "all" operations at server side, as shown at Fig. 2, and pushing the result to the client STB via a downstream transfer DT.

Although only downstream transfer is used, which makes it attractive for access lines with low upstream bandwidth BW, the background graphical buffer B needs to be dumped in video memory, whereby additional memory is required at the server side to keep pixel information per client STB. This solution also doesn't take benefit of the HW Acceleration at the STB side and scales badly at the server side even if high computation power is available. The content can be compressed, but low compression ratios are obtained and high downstream bandwidth BW is used.

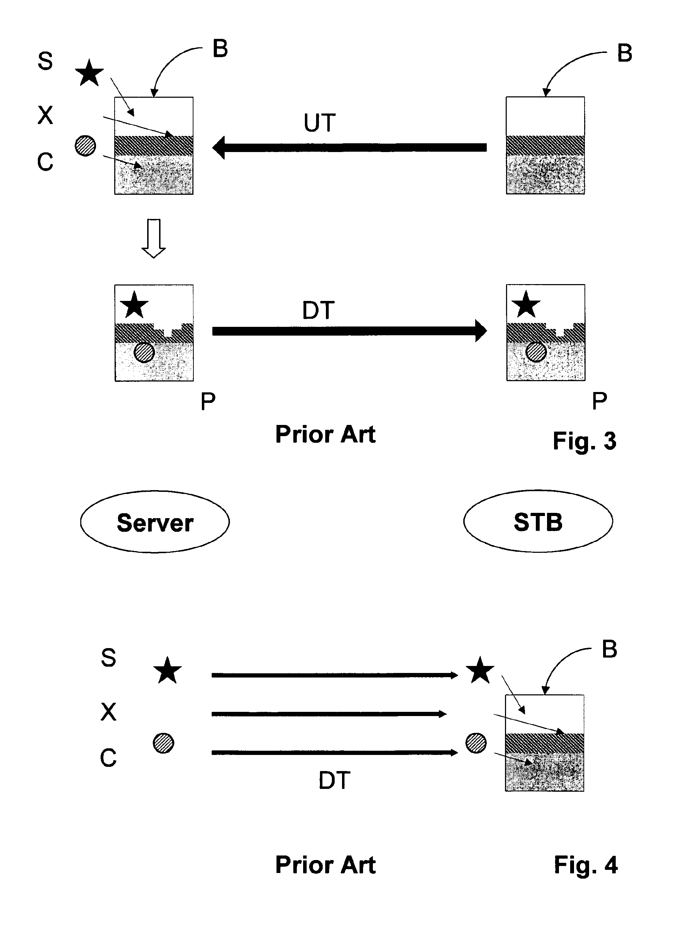

A second possibility comprises upstream content transfer and rendering at server side, as shown at Fig. 3. Therein, the background graphical buffer B is first upstream transferred UT from the client STB to the server. The star S, cross X and circle C objects are then rendered on the background graphical buffer or image B to obtain the composite image P. This composite image P is finally downstream transferred DT to the client STB.

In this second known solution, bidirectional synchronization of local and remote content is used. This approach, known as "X11 approach", doubles the network BW usage because server and STB need to synchronize their graphical buffers constantly. As a consequence, problems rise on ADSL lines where the upstream BW is narrow.

A third possibility is to extend the graphical API at the client STB side with extra operations, as shown at Fig. 4. Therein, function codes to draw the star S, cross X and circle C objects are individually downstream transferred DT from the server to the STB where these objects are rendered in the background graphical buffer B. This approach of extending the graphical networked API with the missing operations at the STB side scales well but breaks compatibility with the standard API, which causes interoperability problems.

An object of the present invention is to provide a method of the above known type but wherein a composite image is drawn at a client set top box STB, while requiring a minimum of software at this STB side.

According to the invention, this object is achieved due to the fact that said method comprises the steps of
- rendering, at the server side, said objects on a transparent graphical buffer to obtain a temporary graphical buffer,
- sending downstream said temporary graphical buffer from said server to said client set top box,
- mixing, at the client side, said temporary graphical buffer with said background graphical buffer to obtain said composite image.

In this way, only the changed pixels, i.e. areas of interest, are taken into account for the rendering, sending and mixing operations. No CPU-intensive pixel-compare is required, since this is a graphical processing unit GPU operation. Moreover, owing to the "light" temporary graphical buffer, an efficient high compression ratio may be obtained, even when run-length encoding compression is used. Finally, no prior graphical content is used; the temporary graphical buffer is only needed for drawing and transferring. The temporary graphical buffer can be released after the transfer completed.

Another characterizing embodiment of the present invention is that said transparent graphical buffer is a color buffer with an alpha-channel information set to zero.

By setting the alpha-channel information of the color buffer initially to zero, this graphical buffer is filled with transparent (by convention for the RGB colorspace: black) pixels.

Also another characterizing embodiment of the present invention is that said mixing is an alpha-blending operation, preferably performed in a graphical processing unit at the client side.

The operation performed by the graphical processing unit GPU is a HW accelerated alpha-blending operation only required at the client side, i.e. in the set top box STB, and is less heavy than similar mixing operations known from the above prior art.

Still another characterizing embodiment of the present invention is that said mixing takes into account said alpha-channel information of the temporary graphical buffer.

Only the pixels changed in the transparent graphical buffer to form the temporary graphical buffer transferred to the STB are mixed therein. This concerns only the pixels with alpha-channel > 0, whereby the bandwidth BW is dramatically reduced.

Yet another characterizing embodiment of the present invention is that said temporary graphical buffer is compressed before being send downstream from the server to the client set top box.

The temporary graphical buffer that is sent through the telecommunication system can be efficiently compressed because its transparent graphical buffer is filled with zeroes. In other words, the 'transparent' temporary graphical buffer will contain at most as much - but is expected to contain much less - useful information than one previously filled with the background color data. As a result, much higher compression ratios is observed.

Again another characterizing embodiment of the present invention is that the compression process uses clipping information.

'Clipping' information is available at the server-side and can be used to feed and thereby to improve the data compression process.

Further characterizing embodiments of the present method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 shows a method for drawing a composite image P;
Fig. 2 represents a prior art method for drawing the image P that consists in keeping the content buffer and renderings at server side;
Fig. 3 represents another prior art method for drawing the image P that consists in transferring the content upstream and rendering at server side;
Fig. 4 represents still another prior art method for drawing the image P that consists in extending the graphical API at the client STB side with extra operations;
Fig. 5 shows a telecommunication server and a client set top box STB using the method according to the invention; and
Fig. 6 represents the method for drawing the image P according to the present invention.

The present method is used in a telecommunication system for drawing a composite image P at a client set top box STB. The composite image P is for instance constituted by objects such as a star S, a cross X and a circle C to be rendered on a background graphical buffer or image B, as shown at Fig. 1.

The telecommunication system also comprises a telecommunication server coupled to the client set top box STB.

Several known solutions to draw the composite image P have been explained above.

However, the solution using downstream transfer DT only, as shown at Fig. 2, where the graphical buffer is dumped in video memory as the disadvantage that, although the content to be transferred can be compressed, low compression ratios are obtained. Moreover, the background graphical buffer or image B needs to be available at the server side.

The other solution of rendering at server side, as shown at Fig. 3, requires that, before this rendering operation, the STB side needs to transfer the background graphical buffer B in upstream direction UT, which causes a problematic on ADSL lines, where the upstream BW is very limited.

The further solution of extending the graphical API at the client STB side with extra operations, as shown at Fig. 4, creates compatibility problems with existing standard implementations.

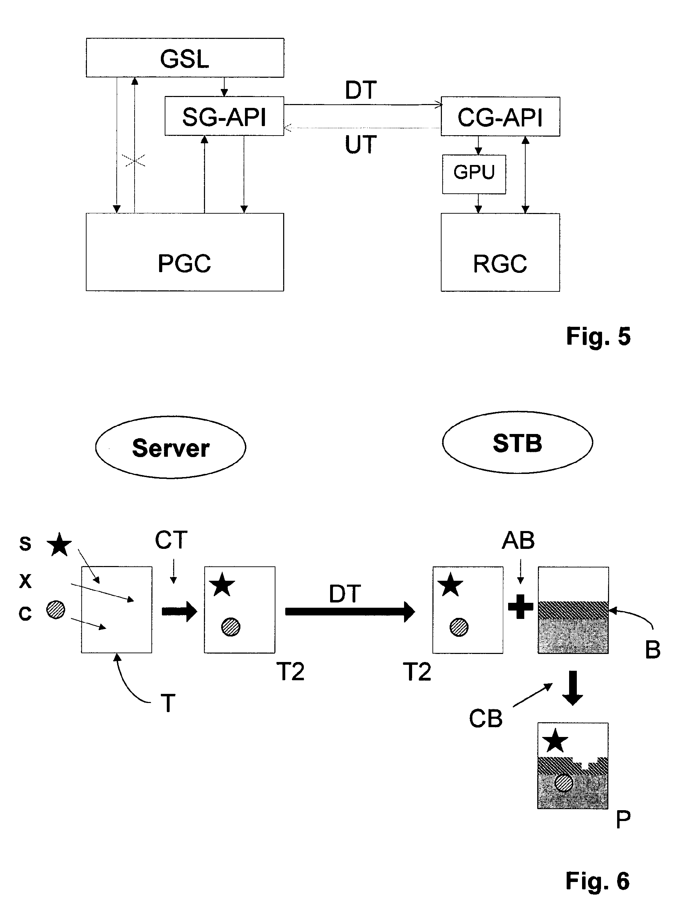

The present embodiment applies to a telecommunication system comprising a telecommunication server and a client set top box STB as shown at Fig. 5.

The server comprises a graphical software layer GSL running applications such as Electronic Program Guide EPG and coupled to a Stubbed Graphic Application Programming Interface API SG-API that is a rendering API receiving function codes of the applications. The server further comprises pseudo graphical contents PGC to which the graphical software layer is coupled and which is also coupled to the Stubbed Graphic API SG-API.

The server is downstream coupled via a link DT to the client STB that comprises core graphics API CG-API coupled to an HW accelerator or Graphics Processing Unit GPU which is further coupled to real graphical contents RGC. The real graphical contents RGC are further coupled to the core graphics API CG-API of the STB.

The drawing method of the present embodiment is represented at Fig. 6.

The basic idea is to render CT by the graphical software layer GSL the star S, cross X and circle C objects on a temporary RGBA graphical buffer T as pseudo graphical content PGC. The temporary RGBA graphical buffer T is a color buffer initially filled with zeroes, i.e. with alpha-channel = 0 corresponding to 100% transparent black pixels or full transparency. In other words, this temporary RGBA graphical buffer is a transparent graphical buffer T.

The resulting temporary graphical buffer T2 comprising the objects S, X, C embedded on the transparent graphical buffer T is then downstream sent DT to the core graphics API CG-API of the client set top box STB.

To obtain the expected composite image P, the Graphics Processing Unit GPU of the STB performs a normal alpha-blending or mixing operation AB on a background graphical buffer B as real graphical content RGC, taking into account the alpha-channel information of the temporary graphical buffer T2.

The drawing operations are thus performed on a temporary graphical buffer T2 at server side. This temporary graphical buffer T2 is sent to the STB where its content gets mixed with the real STB graphical buffer B. As a result, this method requires only an alpha-blending operation, preferably HW accelerated, at the client STB side.

In a preferred embodiment, the temporary graphical buffer T2 sent over the network is compressed. This compression is efficiently because the temporary graphical buffer T2 is mainly constituted by the transparent graphical buffer T that is filled with zeroes.

Using this drawing method has the following advantages:
1) Only the changed pixels, i.e. the areas of interest (eventually supported with extra clipping information from the graphical layers), are taken into account, i.e. with alpha-channel > 0. No CPU-intensive pixel-compare is required, since this is a Graphics Processing Unit GPU operation;
2) High compression ratio can be achieved. At initialization time, the temporary graphical buffer only containing "zero" pixels, i.e. zero information or maximum entropy. Only the changes contain the relevant information, hence it compresses very efficiently even when run-length encoding compression is used; and
3) It is stateless: no prior real or background graphical content is used, i.e. a temporary graphical buffer is only needed for drawing and transferring. It can be released after the transfer completed.

It is to be noted that the above advantage 1) mentions the use of clipping information in order to improve the compression process. Clipping is a method that instructs the drawing system only to draw inside the boundaries given by an application or program, e.g. a full screen of 1280×1024 pixels can be clipped to a rectangular region with pixel coordinates (0,0)-(100,200). All subsequent drawing operations that fall out of this clipping region will not be drawn. This technique is often used in 2D and 3D programming, such that CPU and/or GPU computing cycles can be saved. Clipping is also a convenient functionality for limiting unexpected drawing out of a given region.

A final remark is that embodiments of the present embodiment are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the embodiment have been described above in connection with specific apparatus, it is to be clearly understood that this description is merely made by way of example and not as a limitation on the scope of the embodiment, as defined in the appended claims.

## Claims

1. A method for drawing a composite image (P) at a client set top box (STB) of a telecommunication system also comprising a server coupled to said client set top box, said composite image comprising objects (S, X, C) rendered on a background graphical buffer (B),
***characterized in that*** said method comprises the steps of
- rendering (CT), at the server side, said objects (S, X, C) on a transparent graphical buffer (T) to obtain a temporary graphical buffer (T2),
- sending (DT) downstream said temporary graphical buffer (T2) from said server to said client set top box (STB),
- mixing (AB), at the client side, said temporary graphical buffer (T2) with said background graphical buffer (B) to obtain said composite image (P).

2. The method according to claim 1, ***characterized in that*** said transparent graphical buffer (T) is a color buffer with an alpha-channel information set to zero.

3. The method according to claim 1, ***characterized in that*** said mixing is an alpha-blending operation.

4. The method according to claim 3, ***characterized in that*** said mixing is an alpha-blending operation performed in a graphical processing unit (GPU) at the client side.

5. The method according to claim 3, ***characterized in that*** said mixing takes into account said alpha-channel information of the temporary graphical buffer (T2).

6. The method according to claim 1, ***characterized in that*** said temporary graphical buffer (T2) is compressed before being send downstream from the server to the client set top box (STB).

7. The method according to claim 6, ***characterized in that*** the compression process uses clipping information.

8. The method according to claim 1, ***characterized in that*** said background graphical buffer (B) is available at said client set top box (STB).
